# EUROPÄISCHE PATENTANMELDUNG

(11) **EP 3 806 248 A1**
(43) Veröffentlichungstag der Anmeldung: **14.04.2021**
(21) Anmeldenummer: 19201857.0
(22) Anmeldetag: 08.10.2019
(51) Int. Cl.: H01R 13/73, H01R 24/76

(54) **STECKDOSE ZUM ELEKTRISCHEN ANSCHLIESSEN EINES ANHÄNGERS AN EIN KRAFTFAHRZEUG**

(71) Anmelder: Plastimat GmbH, 33378 Rheda-Wiedenbrück (DE)
(72) Erfinder: Koller, Ulrich, 16515 Oranienburg (DE)
(74) Vertreter: Bach, Alexander

(57) **Zusammenfassung**

Der Erfindung betrifft die Montage einer Steckdose mit Dosendeckel. Die Steckdose dient dem elektrischen Anschließen eines Anhängers an ein Kraftfahrzeug.

Abhängig vom Fahrzeugtyp ist eine fahrzeugseitige Kabelführung zur Steckdose z.B. herstellerseitig vorgegeben. Somit ist die Steckdose in eine vorgesehene Öffnung in bestimmter Ausrichtung einzusetzen. Diese somit implizit vorgegebene Orientierung der Steckdose kann eine Zugänglichkeit der Steckdose insbesondere dahingehend beeinträchtigen, dass eine ungünstige Öffnungsrichtung eines Dosendeckels einen Benutzer am einfachen Einsetzen hindert. Die neue Steckdose soll so orientierbar sein, dass ein Benutzer einen Stecker auf komfortable Weise einsetzen kann.

Erfindungsgemäß weist die Steckdose hierzu ein erstes Sicherungsmittel auf, mit dem die Steckdose in einer aus mehreren möglichen Orientierungen gewählten Orientierung in einer Aufnahme gehalten werden kann.

## Beschreibung

Die Erfindung betrifft eine Steckdose zum elektrischen Anschließen eines Anhängers an ein Kraftfahrzeug aufweisend ein Dosengehäuse mit einer durch einen Dosendeckel verschließbaren Gehäuseöffnung zum Einsetzen eines Steckers.

Eine derartige Steckdose ist z.B. aus der DE 20 2010 003 686 U1 bekannt. Die darin beschriebene Steckdose ist an einem schwenkbaren Kugelhals einer Anhängerkupplung vorgesehenen. Zur besseren Zugänglichkeit der Steckdose beim Einstecken eines Steckers ist die Steckdose an einer Oberseite des Kugelhalses angeordnet. Abhängig vom Fahrzeugtyp ist eine fahrzeugseitige Kabelführung zur Steckdose z.B. herstellerseitig vorgegeben. Somit ist die Steckdose in eine in dem Kugelhals vorgesehene Öffnung in bestimmter Ausrichtung einzusetzen. Diese somit implizit vorgegebene Orientierung der Steckdose kann eine Zugänglichkeit der Steckdose insbesondere dahingehend beeinträchtigen, dass eine ungünstige Öffnungsrichtung eines Dosendeckels einen Benutzer am einfachen Einsetzen hindert.

Es ist daher eine Aufgabe der vorliegenden Erfindung, eine Steckdose zur Verfügung zu stellen, in welche ein Benutzer einen Stecker auf komfortable Weise einsetzen kann.

Diese Aufgabe wird erfindungsgemäß mit einer Steckdose nach den Merkmalen des Anspruch 1 gelöst. Dabei weist die Steckdose erfindungsgemäß weiterhin ein erstes Sicherungsmittel auf, mit dem die Steckdose in einer gewählten Orientierung in einer Aufnahme gehalten werden kann

Die erfindungsgemäße Steckdose löst die Aufgabe dahingehend, dass die Steckdose in einer gewählten, vorzugsweise einer frei wählbaren, Orientierung in eine Aufnahme z.B. eines Kupplungshakens oder eines Kugelhalses einsetzbar ist und in dieser Orientierung durch ein erstes Sicherungsmittel gehalten werden kann. Eine optimale Orientierung der Steckdose ist somit einfach erzielbar während ein reversibles erstes Sicherungsmittel eine besonders einfache Montage und Justierbarkeit der Steckdose erlaubt. "Optimal" kann in diesem Zusammenhang insbesondere die beschriebene Zugänglichkeit bezeichnen; es ist jedoch auch denkbar, dass die frei wählbare Orientierung der Steckdose weiteren Nutzen mit sich bringt, wie z.B. das Abhalten von Spritzwasser oder Regenwasser durch einen im mit einem Stecker verbundenen Zustand von der Steckdose in einer bestimmten, durch die Orientierung der Steckdose implizit festgelegten Richtung abstehenden Dosendeckel. Der Dosendeckel könnte somit als mechanische Barriere gegen das Eintreten von Fremdkörpern, insbesondere Spritz- oder Regenwasser fungieren.

Dabei ist es vorteilhaft, wenn mit dem ersten Sicherungsmittel die Steckdose außerdem in einer gewählten Position bezüglich der Aufnahme gehalten werden kann. Es ist somit möglich, ein erstes Sicherungsmittel bereitzustellen, mit welcher die Steckdose nicht nur in einer gewünschten Orientierung gehalten werden kann, sondern das gleichzeitig das Halten der Steckdose in gewünschter Position, insbesondere bezüglich ihrer axialen Position, erlaubt. Dies reduziert den Aufwand der Sicherung. Somit kann das Montieren der Steckdose einfacher erfolgen und die Anzahl der benötigten Komponenten vorteilhaft verringert werden.

Es ist weiterhin vorteilhaft, wenn die Steckdose weiterhin ein zweites Sicherungsmittel aufweist, mit dem die Steckdose in einer gewählten Position bezüglich der Aufnahme gehalten werden kann. Bei Verwendung von zwei separaten Sicherungsmitteln, um die Orientierung und Position der Steckdose zu sichern, können Bauteile geringer Komplexität verwendet werden, was den Aufwand der Fertigung reduziert und eine modularere Bauweise erlaubt.

Es ist weiterhin vorteilhaft, wenn das erste Sicherungsmittel wenigstens einen, vorzugsweise zwei, gegenüber der Steckdose schwenkbaren Klemmbügel umfasst. Durch die Verwendung von wenigstens einem, vorzugsweise mehreren, Klemmbügeln ist es besonders effizient möglich, Klemmkräfte aufzubauen und gleichzeitig einen Formschluss zu erzielen. Weiterhin wird die Montage deutlich vereinfacht. Die Klemmbügel können derart gestaltet werden, dass die Steckdose in einem geöffneten Zustand der Klemmbügel in eine Aufnahme einsetzbar ist. Zum Halten der Orientierung und optional Halten der Position der Steckdose können die Klemmbügel werkzeuglos geschlossen werden.

Es ist weiterhin vorteilhaft, wenn der schwenkbare Klemmbügel eine über seine Schwenkachse hinausstehende Klemmfläche aufweist, welche dazu geeignet ist mit der Aufnahme klemmend wechselzuwirken. Weisen der oder die Klemmbügel eine entsprechende Klemmfläche auf, so ist es möglich, dass die Klemmfläche im geschlossenen Zustand der Klemmbügel die Aufnahme überdeckt, was zum einen Formschluss von Steckdose und Aufnahme ermöglicht; zum anderen kann die Klemmfläche so bemessen sein, dass sie im Kontaktbereich mit der Aufnahme eine Flächenpressung erzeugt, deren resultierende Reibkraft das Halten in der gewählten Orientierung ermöglicht.

Es ist weiterhin vorteilhaft, wenn das erste Sicherungsmittel ein erstes Formschlussmittel und ein zweites Formschlussmittel aufweist, wobei das erste Formschlussmittel bezüglich der Steckdose ortsfest sicherbar ist, und wobei das zweite Formschlussmittel bezüglich der Aufnahme ortsfest sicherbar ist. Durch das Wechselwirken eines ersten und zweiten Formschlussmittels kann das erste Sicherungsmittel besonders einfach z.B. auf Grundlage zweier korrespondierender Bauteile realisiert werden.

Es ist weiterhin vorteilhaft, wenn das zweite Formschlussmittel mittels des zweiten Sicherungsmittels oder eines weiteren Sicherungsmittels ortsfest sicherbar ist. Das zweite Formschlussmittel kann so mittels des zweiten Sicherungsmittels bezüglich der Aufnahme ortsfest gesichert werden, was die Anzahl zu dieser Sicherung notwendiger Komponenten durch das Verwenden ohnehin schon vorgesehener Bauteile verringert. Der Aufwand der Fertigung und der Montage kann somit reduziert werden.

Es ist weiterhin vorteilhaft, wenn das erste Formschlussmittel wenigstens eine Nut oder Zahn aufweist, und das zweite Formschlussmittel wenigstens einen korrespondierenden Zahn oder Nut aufweist. Ein solcher Positionierring ist einfach herzustellen und zu montieren. Er kann separat zur Steckdose vorgesehen sein, was die Modularität des Systems erhöht.

Es ist weiterhin vorteilhaft, wenn das erste Formschlussmittel wenigstens eine Nut oder Zahn aufweist, und das zweite Formschlussmittel wenigstens einen korrespondierenden Zahn oder Nut aufweist. Formschlussmittel aufweisend Nut und Zahn sind einfach herzustellen. Darüber hinaus kann durch die Anzahl und Teilung von Nut und Zahn die Wahlmöglichkeit der Orientierungen der Steckdose auf bestimmte Stellungen oder auch nur eine Stellung begrenzt werden. Dies erlaubt die Limitierung der zu erzielenden Orientierungen auf erwünschte Konfigurationen und erhöht die Effizienz der Montage.

Es ist weiterhin vorteilhaft, wenn die Aufnahme integral in einem Kupplungshaken des Fahrzeugs ausgebildet ist, oder die Aufnahme in einem Körper, insbesondere einem Flansch, ausgebildet ist, der gemeinsam mit oder separat zu dem Kupplungshaken vorgesehen ist. Die erfindungsgemäße Steckdose kann sowohl in feststehende, als auch in schwenkbare Kupplungshaken eingesetzt werden. Weiterhin kann die Steckdose im Kupplungshaken selber befestigt werden, als auch in einem separaten Bauteil. Dadurch wird der Anwendungsbereich der Steckdose erweitert.

Im Folgenden wird die Erfindung anhand der in den Figuren dargestellten Ausführungsbeispiele und weiterer, nicht dargestellter Ausführungsbeispiele beschrieben und näher erläutert.

### Dabei zeigt

Fig. 1 eine Explosionsdarstellung einer ersten Ausführungsform der erfindungsgemäßen Steckdose.
Fig. 2 die Dose der ersten Ausführungsform von der Unterseite mit daran angebrachtem Anschlusskabel.
Fig. 3 die Dose der ersten Ausführungsform in einem teilweise in den Kupplungshaken eingesetzten Zustand.
Fig. 4 die Dose der ersten Ausführungsform im vollständig in den Kupplungshaken eingesetzten Zustand mit geöffnetem Klappdeckel und Klapplasche.
Fig. 5 die Dose der ersten Ausführungsform im vollständig in den Kupplungshaken eingesetzten Zustand mit teilweise geschlossenem Klappdeckel und Klapplasche.
Fig. 6 die Dose der ersten Ausführungsform mit geschlossenem Klappdeckel und Klapplasche.
Fig. 7 die Dose der ersten Ausführungsform mit geschlossenem Klappdeckel und Klapplasche und mit Anschlusskabel.
Fig. 8 die Dose der ersten Ausführungsform mit geöffnetem Klappdeckel und Klapplasche und mit Anschlusskabel.
Fig. 9 eine Schnittansicht der Dose der ersten Ausführungsform in einem eingesetzten und Zustand mit verschlossenem Klappdeckel und Klapplasche.
Fig. 10 eine Dose einer zweiten Ausführungsform mit geöffnetem Positionierring und mit Anschlusskabel.
Fig. 11 die Dose der zweiten Ausführungsform mit geschlossenem Positionierring und teilweise eingesetzten Schrauben.
Fig. 12 die Dose der zweiten Ausführungsform im in den Kupplungshaken eingesetzten und fixierten Zustand.
Fig. 13 eine Explosionsdarstellung einer dritten Ausführungsform der erfindungsgemäßen Steckdose.

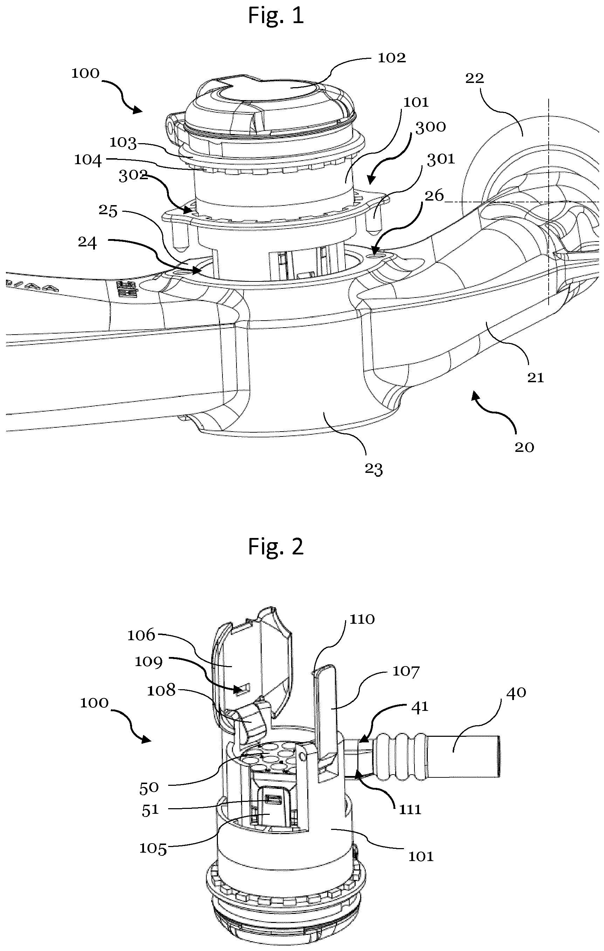

Figur 1 zeigt in einer Explosionsdarstellung das erste Ausführungsbeispiel der Erfindung. Eine bekannte Steckdose 100 (siehe z.B. DE 20 2016 101 439 U1 oder DE 20 2009 011 568 U1) ist zur Befestigung an einem Kupplungshaken 20 vorgesehen. Dieser umfasst in bekannter Weise (siehe z.B. DE 20 2010 003 686 U1) einen Kugelhals 21, der einen Kugelkopf 22 trägt.

Der Kupplungshaken 20 kann beliebig geformt sein und ist vorzugsweise für die Verwendung bei einem Kraftfahrzeug, wie PKW oder LKW, geeignet. In diesem Ausführungsbeispiel ist eine Aufnahme 24 integral im Kupplungshaken 20 ausgebildet, die in noch zu beschreibender Weise mit der Steckdose wechselwirken kann.

Die Aufnahme 24 ist in diesem Beispiel eine im Wesentlichen zylinderförmige Aussparung im Kupplungshaken 20, sodass sie die ebenfalls im Wesentlichen zylindrische Steckdose 100 gleitend oder allseits beabstandet aufnehmen kann. In anderen Worten weist die Aufnahme 24 überwiegend einen größeren Durchmesser als die Steckdose 100 auf, so dass die Steckdose 100 in der Aufnahme 24 rotierbar und/oder in diese einsetzbar ist. Es ist jedoch auch jede andere Form von Aufnahme 24 und Steckdose 100 denkbar, solange diese bevorzugt vollständig gegeneinander drehbar, wenigstens jedoch teilweise schwenkbar, sind.

Die Aufnahme 24 kann integral in einem Kupplungshaken 20 des Fahrzeugs oder in einem Flansch ausgebildet sein, der gemeinsam mit oder separat zu dem Kupplungshaken 20 vorgesehen ist.

Dabei ist es vorteilhaft, die die Aufnahme 24 umgebenden Bereiche des Kupplungshakens 20, also einen Aufnahmekörper 23, sicken- oder wulstartig verstärkt vorzusehen, damit eine ausreichende Zug- und Dauerfestigkeit des Kupplungshakens gewährleistet ist. Es wäre aber auch denkbar, den Kupplungshaken mit ansonsten unveränderter Geometrie herzustellen und andere festigkeitssteigernde bzw. -erhaltende Maßnahmen zu ergreifen, wie z.B. eine Composite-Struktur zu verwenden oder einen belastungsoptimierten generativ gefertigten Kupplungshaken 20 einzusetzen.

Zusätzlich zu der Aufnahme 24 weist der Kupplungshaken 20 in diesem Ausführungsbeispiel auch Fixieröffnungen 26 auf, welche mit einem weiteren Sicherungsmittel, hier den Stiften 301, wechselwirken können.

Weiterhin bildet die im Wesentlichen senkrecht zur Erstreckungsrichtung der Aufnahme 24 liegende Außenfläche des Kupplungshakens 20 im unmittelbar an die Aufnahme 24 angrenzenden Bereich eine vorzugsweise plane Ebene, die hier als Aufnahmeflansch 25 bezeichnet wird. Dieser wiederum steht in noch zu beschreibender Wechselwirkung mit einem Positionierring 300 bzw. 600.

Obwohl im Ausführungsbeispiel der Aufnahmeflansch 25 eine plane Oberfläche aufweist ist es auch denkbar eine unregelmäßig geformte Oberfläche vorzusehen, die z.B. besonders vorteilhafte Dämpfungseigenschaften aufweist, sodass die Schwingungen des Kupplungshakens 20 nicht oder nur teilweise auf die Steckdose 100 übertragen werden.

Figur 1 zeigt weiterhin den Positionierring 300, welcher ein Ausführungsbeispiel des ersten Sicherungsmittels 103 bzw. 300 ist. Dieser wird im Folgenden zunächst strukturell beschrieben, ehe seine Wirkungsweise zur Orientierungssicherung der Steckdose 100 erläutert wird.

Der Positionierring 300 besteht im Ausführungsbeispiel im Wesentlichen aus einem ringförmigen Grundkörper, welcher zwei seitliche Laschen mit daran angebrachten oder mit diesen integral ausgebildeten Stiften 301 aufweist. Die Innenseite des Positionierrings 300 weist sich in radialer Richtung erstreckende Nuten 302 auf, die in ihrer Form mit einem noch zu beschreibenden Zahnflansch 103 wechselwirken können. Mit anderen Worten werden die Nuten 302 durch Aussparungen gebildet, die eine Durchgängigkeit durch diese entlang einer Richtung einer Positionierringmittelachse erlauben. Die Nuten 302 stellen somit ein (zweites) Formschlussmittel 302 dar.

Mit Hilfe der Stifte 301 ist es möglich den Positionierring 300 mit definierter Lage in dem Kupplungshaken 20 bzw. ortsfest bezüglich der Aufnahme 24 zu befestigen.

Der Positionierring 300 ist dabei verliersicher vorgesehen. Dies kann beispielsweise durch eine Presspassung der Stifte 301 in den Fixieröffnungen 26 oder mit Hilfe von Adhäsivmitteln erreicht werden.

Es ist auch vorteilhafthaft, wenn der Positionierring 300 aus einem Kunststoff besteht, um Kotaktkorrosion zu vermeiden und die Fertigungskosten des Positionierrings 300 zu reduzieren. Der Positionierring 300 kann jedoch ebenso aus einem Metall oder anderem geeigneten Material bestehen, wenn es beispielsweise auf eine besondere Festigkeit ankommt.

Die Steckdose 100 ist eine an sich bekannte Steckdose für eine mehrpolige Steckverbindung, insbesondere für eine elektrische Verbindung zwischen einem Kraftfahrzeug und einem Anhänger.

Die Steckdose 100 besteht im Wesentlichen aus einem Dosengehäuse 101, welches beispielsweise mittels Rasthaken 51, die in eine Rastlasche 105 eingreifen, einen Kontakteinsatz 50 trägt (Figur 2). Es sind jedoch auch andere Möglichkeiten bekannt, wie ein Kontakteinsatz 50 in der Steckdose 100 aufgenommen werden kann.

Das Dosengehäuse 101 ist beispielsweise mit einem schwenkbaren Dosendeckel 102 verschlossen und somit im nicht mit einem Stecker verbundenen Zustand gegen Umwelteinflüsse geschützt. Zusätzlich dazu können verschiedene, bekannte Dichtungsmittel vorgesehen sein, welche die Steckdose u.a. gegen das Eindringen von Wasser schützen.

Durch das Öffnen des Dosendeckels 102 wird der Kontakteinsatz 50 über eine Gehäuseöffnung (nicht gezeigt) zum Verbinden mit einem Stecker zugänglich.

Der Kontakteinsatz 50 ist dazu geeignet mit einem Anschlusskabel 40 verbunden zu werden, welches mit dem Bordstromnetz, der Bordelektronik oder dergleichen in Wechselwirkung steht. Dazu kann an der Steckdose 100 eine elektrische Schnittstelle vorgesehen sein, beispielsweise ein Gehäuseanschluss 111. Dieser ist im Ausführungsbeispiel als Steckverbindungsöffnung ausgeführt, wobei diese mit einer Stirnseite 41 des Anschlusskabels 40 verbunden werden kann.

Das Dosengehäuse 101 ist in diesem ersten Ausführungsbeispiel teilweise von einem Zahnflansch 103 umschlossen. Dieser kann entweder integraler Bestandteil des Dosengehäuses 101 oder als separates Element an dem Dosengehäuse 101 vorgesehen und mit diesem bezüglich dessen ortsfest verbunden sein, z.B. durch Adhäsivmittel oder Fügeprozesse. Der Zahnflansch 103 ist somit ein Ausführungsbeispiel des ersten Sicherungsmittels 103 bzw. 300.

Der Zahnflansch 103 kann im Wesentlichen ringförmig ausgeprägt sein. Eine bezüglich einer Einführrichtung der Steckdose untenliegende Seite des Zahnflansches 103 weist Zähne 104 auf, deren Form mit denen der Nuten 302 des Positionierringes 300 im Wesentlichen übereinstimmen. Es ist vorteilhaft, wenn die Zähne 104 kleiner als die Nuten 302 ausgeführt sind, um das noch zu beschreibende Einsetzen der Steckdose 100 in den Positionierring 300 zu erleichtern. Die Zähne 104 des Zahnflansches 103 sind somit ein Ausführungsbeispiel des ersten Formschlussmittels 104.

Die Steckdose 100 weist auf der vom Dosendeckel 102 abgewandten, d.h. der gegenüberliegenden, im Folgenden auch unteren, Seite einen Klappdeckel 106 mit korrespondierender Klapplasche 107 auf. Diese sind in Figur 2 in geöffneter Stellung dargestellt. Klappdeckel 106 und Klapplasche 107 stellen jeweils einen Klemmbügel 108 bereit, welcher ein weiteres Ausführungsbeispiel des ersten Formschlussmittels ist.

Klappdeckel 106 und Klapplasche 107 sind über eine z.B. gelenkige oder plastisch-elastische Verbindung jeweils schwenkbar im Dosengehäuse 101 gelagert. Im Ausführungsbeispiel werden Klappdeckel 106 und Klapplasche 107 dadurch über einen Winkelbereich von ca. 90° gegenüber dem Dosengehäuse 101 schwenkbar, wobei die in Figur 2 dargestellte Position 90° Öffnungswinkel entspricht. Dabei ist es vorteilhaft, wenn Klappdeckel 106 und Klapplasche 107 nicht weiter als dargestellt geöffnet werden können, so dass Klappdeckel 106 und Klapplasche 107 sich im Wesentlichen nicht weiter in einer Umfangsrichtung der Steckdose 100 nach außen erstrecken können als das Dosengehäuse 101, damit ein leichtes Einsetzen der Steckdose 100 in die Aufnahme 24 möglich ist.

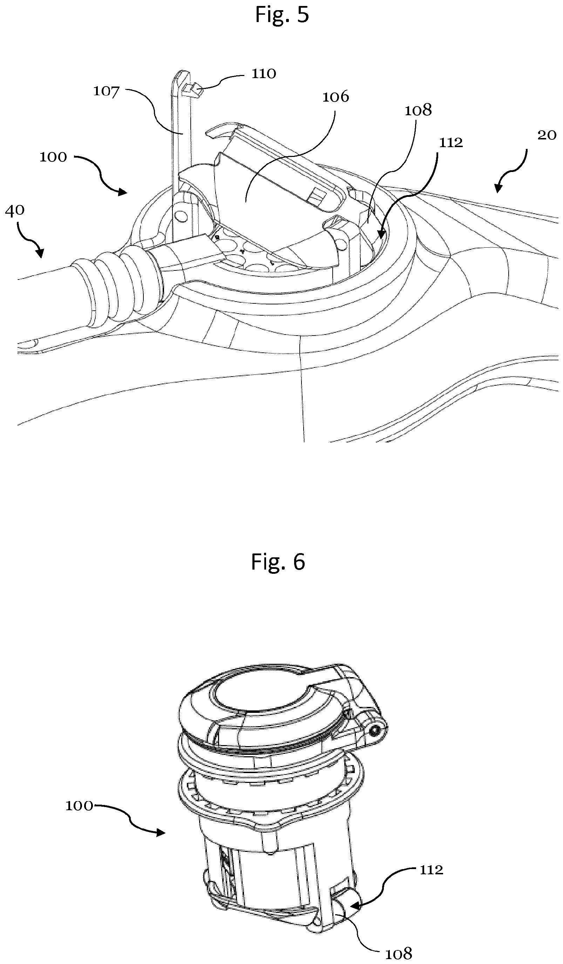

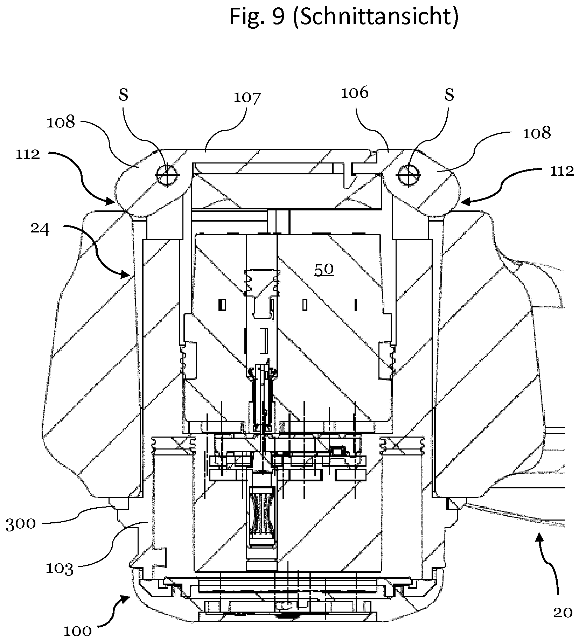

Klappdeckel 106 und Klapplasche 107 können somit ausgehend von der geöffneten Stellung in Richtung einer Mittelachse der Steckdose 100 geschwenkt werden, wie in Figur 5 und Figur 9 besonders gut zu erkennen ist.

Es ist auch denkbar Klappdeckel 106 und Klapplasche 107 nicht im Dosengehäuse 101 schwenkbar zu lagern, sondern in einem zusätzlichen Teil, das modular an eine übliche Steckdose angebaut werden kann.

Klappdeckel 106 und Klapplasche 107 sind so angeordnet und geformt, dass diese in einem geschlossenen Zustand, also nach dem Schwenken nach innen, d.h. zur Mittelachse der Steckdose 100 hin, im Wesentlichen plan aufeinanderliegen können. Dabei kommt in diesem Beispiel die Klapplasche 107 auf dem Klappdeckel 106 zu liegen.

Damit Klappdeckel 106 und Klapplasche 107 arretierbar sind, ist weiterhin eine Arretieröffnung 109 im Klappdeckel 106 vorgesehen, in welche ein Sicherungshaken 110 der Klapplasche 107 eingreifen kann.

Der gelenkige Teil jeweils des Klappdeckels 106 und der Klapplasche 107 ist in der Art einer Kurvenscheibe als sich räumlich erstreckender Klemmbügel 108 ausgeformt, dessen Funktion noch zu beschreiben ist.

Im Folgenden wird der Montageprozess bzw. das Einsetzen und wahlweise Orientieren der Steckdose 100 in den Kupplungshaken 20 bzw. in die Aufnahme 24 gemäß dem ersten Ausführungsbeispiel, umfassend zwei Ausführungsformen des ersten Sicherungsmittels (Klemmbügel 108 und Positionierring 300 mit Zahnflansch 103) erläutert.

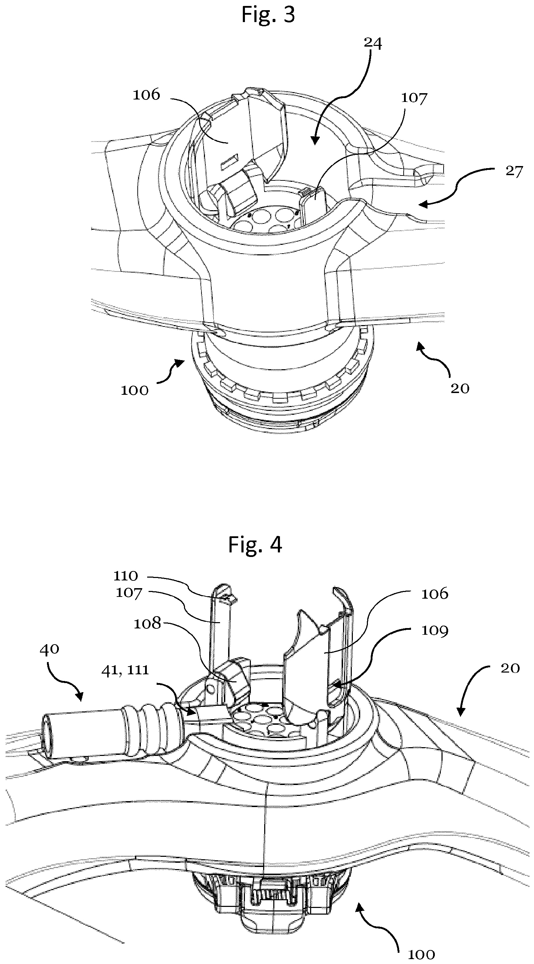

Figur 3 zeigt die Steckdose 100 mit geöffnetem Klappdeckel 106 und Klapplasche 107 während des Einsetzens in den Kupplungshaken 20. Dieser weist auf einer als unten bezeichneten, in der Figur 3 oben liegenden, Seite eine ausgeformte Vertiefung als Kabelaufnahme 27 auf, in welcher das Anschlusskabel 40 formschlüssig oder geklemmt oder auch nur teilweise gestützt aufgenommen werden kann, wie in Figur 4 gezeigt.

Für die Montage der Steckdose 100 wird zunächst der Positionierring 300 mit dem beschriebenen weiteren Sicherungsmittel 301, hier also dem Stift 301, im Kupplungshaken 20 fixiert. Nun wird die Steckdose 100 mit geöffnetem Klappdeckel 106 und geöffneter Klapplasche 107 von der Seite des fixierten Positionierrings 300, also von oben, her in die Aufnahme 24 eingeführt.

Beim Einführen kann die Orientierung der Steckdose 100 bezüglich der Aufnahme 24 im Wesentlichen eine wählbar beliebige sein. Im Ausführungsbeispiel sind die erzielbaren Orientierungen der Steckdose 100 die, in denen der Zahnflansch 103 einrasten kann und somit durch die möglichen Paarungen von Zahn 104 und Nut 302, also den Orientierungen, die zu einem Zustandekommen des Formschlusses des ersten 104 und zweiten 302 Formschlussmittels führen, vorgegeben. In anderen Worten ist es, um die Steckdose im vollständig eingesetzten Zustand bezüglich ihrer Orientierung zu fixieren, nötig, den Positionierring 200 und den Zahnflansch 103 so zueinander zu orientieren, dass Zahn 104 und Nut 302 eingreifen können.

Um die Orientierung der eingesetzten Steckdose 100 zu ändern, kann diese auf analoge Weise bis zum Ausrasten von Zahn 104 und Nut 302 in einer Steckdosenlängsrichtung aus der Aufnahme 24 entnommen, im gewünschten Maß gedreht, und nach dem oben beschriebenen Verfahren wieder eingesetzt und gesichert werden.

Figur 4 zeigt die Steckdose 100 in dem vollständig eingesetzten Zustand und mit noch geöffnetem Klappdeckel 106 und Klapplasche 107. Wahlweise kann nun das Anschlusskabel mit der Steckverbindungen 41 bzw. 111 angebracht werden.

In Figur 5 ist der Prozess des Schließens von Klappdeckel 106 und Klapplasche 107 in einem Zwischenschritt gezeigt. Wie beschrieben wird zunächst der Klappdeckel 106 und danach die Klapplasche 107 geschlossen, sodass diese im Wesentlichen eine plane oder zueinander parallele Lage erreichen und der Sicherungshaken 110 in der Arretieröffnung 109 einrasten kann.

Im Folgenden wird die Wirkungsweise des alternativen ersten Sicherungsmittels, im Ausführungsbeispiel bereitgestellt an Klappdeckel 106 und Klapplasche 107, also dem Klemmbügel 108, beschrieben. Dieses ist in diesem Ausführungsbeispiel dazu in der Lage, neben der gewählten Orientierung die Steckdose auch in einer gewählten Position bezüglich der Aufnahme zu halten, wie im Folgenden deutlich wird.

In den Figur 6 bis Figur 8 ist zu erkennen, dass die Klemmbügel 108 so geformt sind, dass sie bezogen auf einen Schwenkwinkel um ihre Schwenkachse (S), die in diesem Ausführungsbeispiel mit der von Klappdeckel 106 und Klapplasche 107 übereinstimmt, eine variable Kontur aufweisen. Mit anderen Worten variiert der Abstand der Kontur zur Schwenkachse abhängig vom Schwenkachsenwinkel. Die Klemmbügel 108 stellen somit eine Klemmfläche 112 bereit, die abhängig vom Schwenkwinkel des Klemmbügels 108 unterschiedlich radial hervorsteht.

Im geöffneten Zustand von Klappdeckel 106 und Klapplasche 107 stehen die Klemmbügel 108 aufgrund ihrer Form und Anordnung in einer radialen Richtung der Steckdose 100 betrachtet nicht nach außen hervor, damit, wie beschrieben, das Einführen der Steckdose 100 in die Aufnahme 24 nicht beeinträchtigt wird. Beim Schließen von Klappdeckel 106 und Klapplasche 107, wie in Figur 5 angedeutet, tritt durch Schwenken der Klemmbügel 108 um ihre Schwenkachse jedoch die Klemmfläche 112 in radialer Richtung bezüglich der Steckdose 100 hervor, die so geformt sein kann, dass die Klemmfläche 112 mit zunehmendem Schwenkwinkel weiter nach außen tritt.

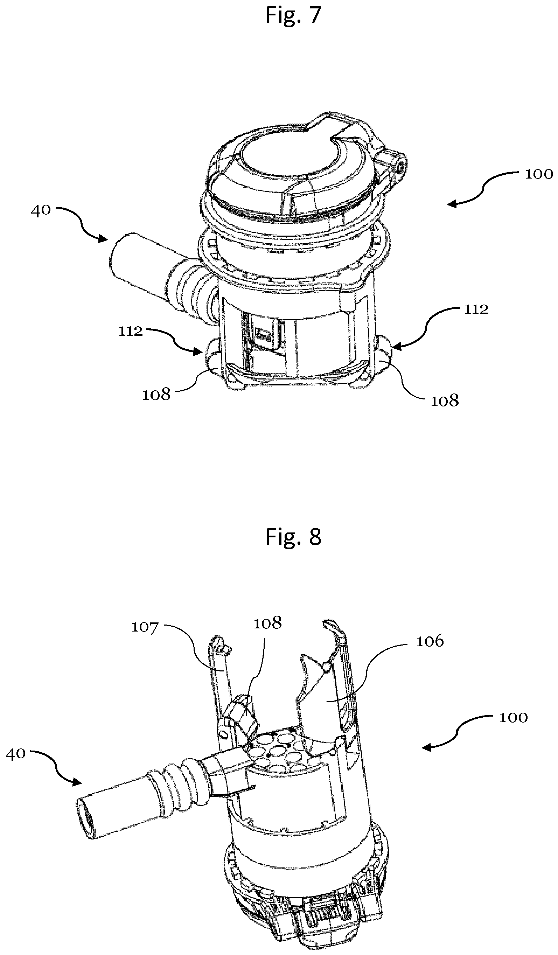

Im geschlossenen Zustand von Klappdeckel 106 und Klapplasche 107, wie in Figur 7 und Figur 9 gezeigt, steht der Klemmbügel 108 in radialer Richtung der Steckdose 100 gesehen schließlich über den Durchmesser der Aufnahme 24 hinaus vor. Es ist bevorzugt, dass diese Lage erreicht wird, wenn ein Totpunkt der Hebel (Klappdeckel 106 und Klapplasche 107) überschritten ist.

Somit ist zum einen eine Positionssicherung der Steckdose 100 möglich, da durch die Verklemmung der Klemmbügel 108 am Kupplungshaken 20 bzw. an der Aufnahme 24, insbesondere am Aufnahmekörper 23, ein axiales Verschieben der Steckdose 100 in der Aufnahme 24 effektiv verhindert werden kann. Die Steckdose kann also mittels der Klemmbügel 108 bezüglich der Aufnahme 24 verspannt bzw. verklemmt, also in ihrer Position gesichert werden.

Zum anderen erlauben es die Klemmbügel 108 auch eine Orientierung der Steckdose 108 in der Aufnahme 24 zu sichern, da die Klemmbügel 108 mittels ihrer Klemmfläche 112 im geschlossenen Zustand Klemmkräfte bezüglich der Aufnahme 24 ausüben. Diese Klemmkräfte führen zu Haftreibung in der Aufnahme 24, die bei geeigneter Auslegung einen ausreichend hohen Torsionswiderstand der Steckdose 100 gegenüber der Aufnahme 24 zur Folge haben. Das erste gezeigte Ausführungsbeispiel ist also von daher redundant, als dass sowohl die Klemmbügel 108, wie auch der Positionierring 300 mit dem Zahnflansch 103 die Orientierung der Steckdose 100 sichern.

In anderen Worten kann durch die beschriebene Klemmung mittels des Klemmbügels 108 eine besonders vorteilhafte Klemmwirkung erzielt werden, in der die resultierende Klemmkraft nicht nur eine Komponente in radialer Richtung bezüglich der Steckdosen-Längsachse besitzt, sondern auch eine Komponente in axialer Richtung bezüglich Steckdosen-Längsachse dergestalt, dass die Klemmkraft eine Orientierungs-, aber auch Positionssicherung ermöglicht.

Durch die Klemmbügel 108 allein, aber auch durch die Kombination von Klemmbügel 108 und Positionierring 300 mit dem Zahnflansch 103 ist es somit möglich die Steckdose 100 verdreh- und verliersicher in ihrer gewünschten Orientierung in der Aufnahme zu halten.

Abhängig von der genauen Gestaltung des Systems und erwünschten Dämpfungseigenschaften kann durch Dimensionierung der Klemmkräfte und Auswahl der Komponentenwerkstoffe außerdem eine schwingungsgünstige Kopplung von Steckdose 100 und Kupplungshaken 20 bzw. Aufnahme 24 erreicht werden. Hierbei ist es auch denkbar, dass die Klemmbügel 108 sich nicht direkt auf dem Kupplungshaken 20 abstützten, sondern auf einer zusätzlichen, dämpfenden Zwischenschicht.

Es ist auch denkbar, anstelle der Klemmbügel 108 eine andere technische Lösung zu implementieren, die eine Erzeugung von Klemmkräften zulässt, wie beispielweise die Nutzung von Federn zur Erzeugung von Federkraft mit Klemmwirkung.

Werden entgegen dem dargestellten Ausführungsbeispiel nur der Klemmbügel 108 als erstes Sicherungsmittel 108 verwendet, so ist es möglich beliebige Orientierungen der Steckdose 100 zu erzielen, da keine Anforderungen an die somit nicht benötigten ersten und zweiten Formschlussmittel, also Zahn 104 und Nut 302, bestehen.

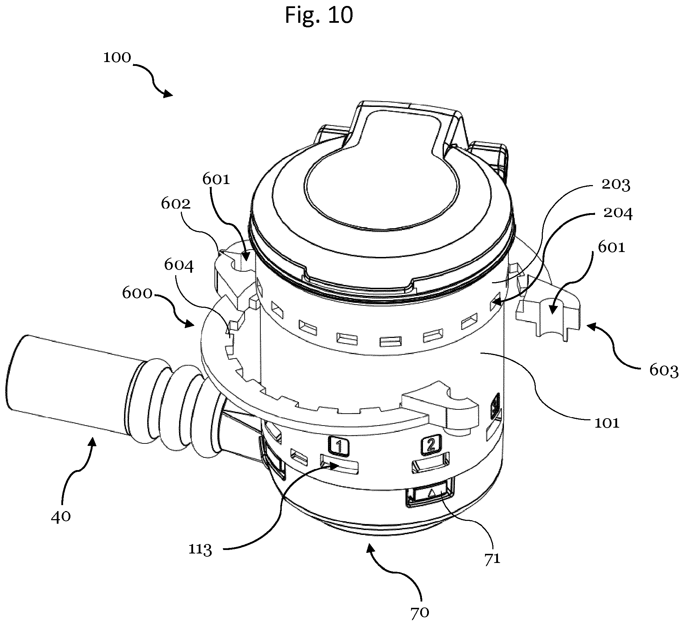

Ein zweites Ausführungsbeispiel ist in den Figuren 10 bis 12 dargestellt und wird im Folgenden beschrieben.

Figur 10 zeigt eine zur ersten Steckdose 100 ähnliche Steckdose 100. Im Gegensatz zum ersten Sicherungsmittel des ersten Ausführungsbeispiels weist diese Steckdose 100 jedoch keinen Zahnflansch 103 auf, sondern anstelle dessen einen Nutflansch 203, der drehfest mit dem Dosengehäuse 101 verbunden ist.

Der Nutflansch 203 ist analog zum Zahnflansch 103 des ersten Ausführungsbeispiels entweder integraler Teil des Dosengehäuses 101 oder separat davon vorgesehen und mit geeigneten Mitteln bezüglich diesem ortsfest fixierbar. Der Nutflansch 203 weist entlang seines Umfangs bevorzugt gleichmäßig verteilte Nuten 204 auf, welche somit das erste Formschlussmittel darstellen.

Ferner umfasst das erste Sicherungsmittel des zweiten Ausführungsbeispiels den Positionierring 600, welcher analog zum Positionierring 300 des ersten Ausführungsbeispiels mit der Steckdose 100 in Wechselwirkung treten kann.

Der Positionierring 600 umfasst einen im Wesentlichen ringförmigen Grundkörper mit zwei Rastteilen 603 die parallel zu einer Mittelachse des Positionierrings 600 Durchgangslöcher 601, sowie in Längsrichtung ausgeformte Vorsprünge aufweisen.

Der Positionierring 600 ist bevorzugt in einer Ebene teilbar, die durch die wenigstens zwei Durchgangslöcher 601 verläuft. Dies wird in diesem Beispiel durch ein Gelenk 602 ermöglicht.

An der innen liegenden Seite des Positionierrings 600 sind Zähne 604 vorgesehen, die analog zum ersten Ausführungsbeispiel mit den Nuten 204 des Nutflansches 203 korrespondieren und somit das zweite Formschlussmittel darstellen.

Das Dosengehäuse 101 der Steckdose 100 ist in diesem Ausführungsbeispiel umlaufend geschlossen vorgesehen. Es weist in einem bezüglich Figur 10 unteren Bereich mehrere Kabelöffnungen 113 auf, in diesem Beispiel sind es acht. Eine elektrische Verbindung von Kabeln (nicht gezeigt) mit Komponenten der Steckdose 100, z.B. mit dem Kontakteinsatz 50, kann hierbei über eine der Kabelöffnungen 113 erfolgen. Dazu wird zunächst gewählt, in welcher Relativlage die Steckdose 100 zur Kupplung vorgesehen werden soll, woraus sich die Relativlage von Steckdose 100 zu Anschlusskabel 40 ergibt. Damit lässt sich bestimmen, welche Kabelöffnungen 113 den geringsten Abstand dazu einnehmen wird und die Kabel durch die entsprechende Kabelöffnungen 113 nach außen geführt werden. Die Zugänglichkeit zur Montage beim Wechsel einer Kabelöffnungen 113 wird durch einen Kabeladapter 70 gewährleistet, der durch Arretierlaschen 71 reversibel montierbar ist.

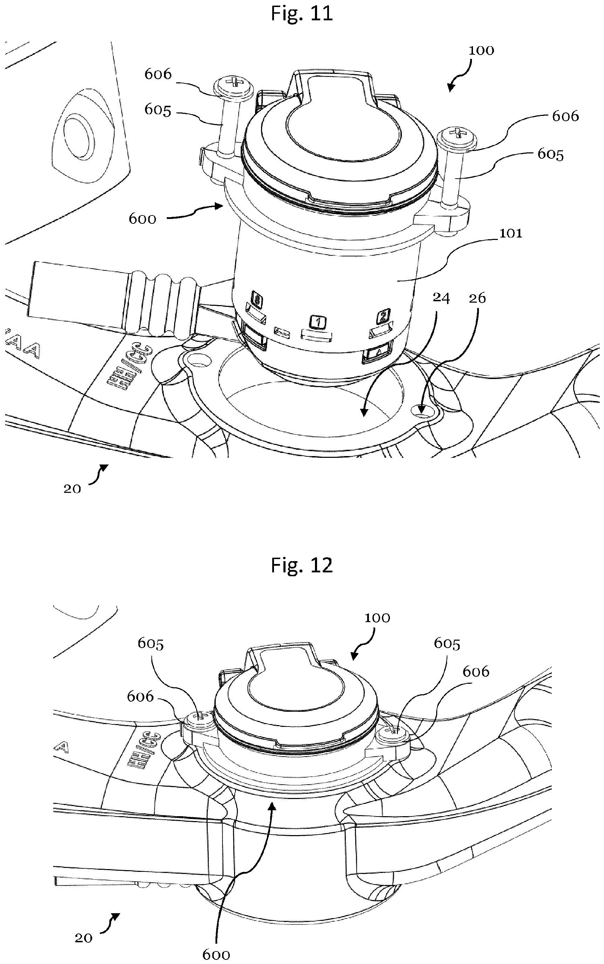

Die Figuren 11 und 12 zeigen das Montageverfahren des zweiten Ausführungsbeispiels.

Zunächst wird der Positionierring 600 mit vorher bestimmter Lage an der Steckdose angebracht, indem die Zähne 604 mit den Nuten 204 in formschlüssigen Eingriff gebracht werden. Dann wird die Steckdose 100 in den Kupplungshaken 20 bzw. die Aufnahme 24 eingeführt, sodass die Vorsprünge des Rastteile 603 in die Fixieröffnung 26 eingreifen.

Im nächsten Schritt werden Schrauben 605, optional mit Unterlegscheiben 606, in den Positionierring 600 eingesetzt. Mit den Schrauben 605 ist eine Fixierung des ersten Sicherungsmittels, dem in den Nutflansch 203 eingreifenden Positionierring 600, in den Fixieröffnungen 26 des Kupplungshakens 20 bzw. der Aufnahme 24 möglich. Die Fixieröffnungen 26 weisen in diesem Ausführungsbeispiel ein entsprechendes Gewinde auf.

Durch das Verschrauben der ersten Sicherungsmittels 203 bzw. 600 des zweiten Ausführungsbeispiels in dem Kupplungshaken 20 bzw. der Aufnahme ist dieses bezüglich der Aufnahme 24 ortsfest gesichert. Die Position der Steckdose 100 ist somit festgelegt. Die Schrauben 605 sind in diesem Ausführungsbeispiel daher ein zweites Sicherungsmittel 605. Das zweite Formschlussmittel 604, die Zähne 604 des Positionierrings 600 sind somit durch das zweite Sicherungsmittel 605, die Schrauben 605, ortsfest bezüglich der Aufnahme 24 gesichert.

Das in Figur 11 dargestellte Anschlusskabel 40 dient lediglich der Verdeutlichung des Gesamtaufbaus; es kann selbstverständlich erst nach erfolgtem Einsetzen der Steckdose 100 in den Kupplungshaken 20 montiert werden, so wie in Figur 12 dargestellt.

Durch die Unterlegscheiben 606 wird eine Kontaktfläche zwischen Positionierring 600 und Schraube 605 erhöht, wodurch eine daraus im montierten Zustands resultierende Press- bzw. Klemmkraft einem unerwünschten Öffnen des Positionierring 600 entgegenwirkt. Die Flächenpressung kann hingegen im Vergleich zur direkten Montage der Schrauben 605 reduziert werden, was die Belastung des Positionierrings 600 vorteilhaft verringert.

Wie dargestellt wird in diesem Ausführungsbeispiel auf Klappdeckel 106 und Klapplasche 107 verzichtet und eine Lagesicherung in Längsrichtung der Steckdose 100 durch die Verschraubung, also mittels des zweiten Sicherungsmittels 605 erzielt, während die Orientierungssicherung der Steckdose 100 durch die formschlüssige Zahn-Nut-Paarung des ersten Sicherungsmittels 203 bzw. 600 erreicht wird.

Dieses Ausführungsbeispiel kommt daher mit einer geringeren Anzahl an Komponenten aus und kann somit günstiger hergestellt werden. Um eine Demontage der Steckdose vorzunehmen, z.B. um die Orientierung dieser zu ändern, ist jedoch der Einsatz von Werkzeug nötig.

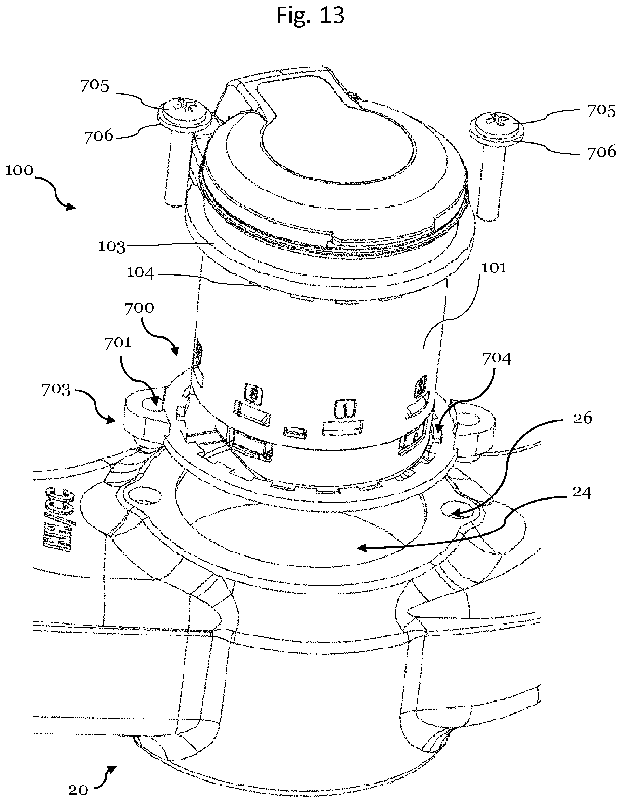

Figur 13 zeigt ein drittes Ausführungsbeispiel in dem ein nicht-teilbarer Positionierring 700 vorgesehen ist, der in seiner grundsätzlichen Funktionsweise analog zu dem des ersten Ausführungsbeispiels ist. Hierbei weist das Dosengehäuse 101 ebenfalls den Zahnflansch 103 auf, der drehfest mit dem Dosengehäuse 101 verbunden ist. Im Unterschied zum ersten Ausführungsbeispiel weist der Positionierring 700 jedoch Durchgangslöcher 701 in Rastteilen 703 auf. Der Positionierring 700 weist an einem inneren Umfang Nuten 704 auf, die mit dem Zahnflansch 103 in Eingriff bringbar sind. Die Fixieröffnungen 26 im Kupplungshaken 24 bzw. der Aufnahme 24 sind hierbei als Gewinde ausgeführt.

Der Montageprozess ist analog zu dem für das zweite Ausführungsbeispiel beschriebenen Prinzip. Zunächst wird der Positionierring 700 lose auf dem Kupplungshaken 20 bzw. der Aufnahme 24 angeordnet. Dann kann die Steckdose 100 in im Wesentlichen gewünschter Orientierung in die Aufnahme 24 eingeführt werden, so dass ein Formschluss der Nut-Zahn-Paarung von Positionierring 700 und Zahnflansch 103 erzielt wird. Dann können analog zum zweiten Ausführungsbeispiel Schrauben 705 mit ggf. Unterlegscheiben 706 genutzt werden, um einen vorstehenden Teil des Zahnflansches 103 gegenüber dem Kupplungshaken 20 bzw. der Aufnahme 24 zu sichern. Auf diese Weise kommt sowohl eine Orientierungssicherung durch das erste Sicherungsmittel 103 bzw. 700, als auch eine Positionssicherung durch das zweite Sicherungsmittel 705 zustande.

In einem nicht gezeigten Ausführungsbeispiel weist die im Wesentlichen zylindrische Aufnahme 24 an einer innenliegenden Seite wenigstens einen in Längsrichtung der Aufnahme 24 orientierten Materialvorsprung auf, der mit einer entsprechenden Materialaussparung in einer Außenseite der Steckdose 100 formschlüssig wechselwirken kann, sodass die Orientierung der Steckdose 100 vor dem Einsetzen in die Aufnahme 24 gewählt wird und diese beim Einsetzen der Steckdose 100 in die Aufnahme 24 durch den Formschluss gehalten wird. In diesem Ausführungsbeispiel stellen Materialvorsprung und Materialaussparung also ein erstes Sicherungsmittel mit erstem und zweitem Formschlussmittel dar, wobei das erste Sicherungsmittels somit integral ausgebildet ist.

Es ist ebenso denkbar, eine dem Positionierring 300 entsprechende Geometrie nur in einem oberen Bereich der Aufnahme 24 vorzusehen, indem die entsprechende Nut-Geometrie z.B. durch spanende oder urformende Verfahren direkt im oberen Teil der Aufnahme 24 erzeugt wird. Diese kann dann z.B. mit dem beschriebenen Zahnflansch 103 wechselwirken um das erste Sicherungsmittel zu bilden. Es kann somit auf den Positionierring 300 verzichtet werden.

In einem weiteren Ausführungsbeispiel wird die Steckdose 100 auf herkömmliche Weise in den Kupplungshaken 20 bzw. die Aufnahme 24 eingesetzt oder an diesem bzw. dieser befestigt. Um nun die Orientierung der Steckdose 100 zu beeinflussen, ist dabei der Dosendeckel 102 drehbar gegenüber der Steckdose 100, z.B. dem Dosengehäuse 101, vorgesehen.

Alle beschriebenen und/oder bildlich dargestellten Merkmale bilden für sich oder in beliebiger Kombination den Gegenstand der Erfindung.

### Bezugszeichenliste

100 Steckdose
101 Dosengehäuse
102 Dosendeckel
103 Zahnflansch
104 Zahn
105 Rastlasche
106 Klappdeckel
107 Klapplasche
108 Klemmbügel
109 Arretieröffnung
110 Sicherungshaken
111 Gehäuseanschluss
112 Klemmfläche
113 Kabelöffnung
114 Gehäuseöffnung

203 Nutflansch
204 Nut

20 Kupplungshaken
21 Kugelhals
22 Kugelkopf
23 Aufnahmekörper
24 Aufnahme
25 Aufnahmeflansch
26 Fixieröffnung
27 Kabelaufnahme

300 Positionierring
301 Stift
302 Nut

40 Anschlusskabel
41 Stirnseite

50 Kontakteinsatz
51 Rasthaken

600 Positionierring
601 Durchgangsloch
602 Gelenk
603 Rastteil
604 Zahn
605 Schraube
606 Unterlegscheibe

70 Kabeladapter
71 Arretierlasche

700 Positionierring
701 Durchgangsloch
703 Rastteil
704 Nut
705 Schraube

706 Unterlegscheibe
S Schwenkachse

## Patentansprüche

1. Steckdose (100) zum elektrischen Anschließen eines Anhängers an ein Kraftfahrzeug, aufweisend ein Dosengehäuse (101) mit einer durch einen Dosendeckel (102) verschließbaren Gehäuseöffnung zum Einsetzen eines Steckers
**dadurch gekennzeichnet, dass**
die Steckdose (100) weiterhin ein erstes Sicherungsmittel (108; 103, 300; 203, 600; 103, 700) aufweist, mit dem die Steckdose (100) in einer aus mehreren möglichen Orientierungen gewählten Orientierung in einer Aufnahme (24) gehalten werden kann.

2. Steckdose (100) nach Anspruch 1,
**dadurch gekennzeichnet, dass**
mit dem ersten Sicherungsmittel (108) die Steckdose (100) außerdem in einer gewählten Position bezüglich der Aufnahme (24) gehalten werden kann.

3. Steckdose (100) nach Anspruch 1,
**dadurch gekennzeichnet, dass**
die Steckdose (100) weiterhin ein zweites Sicherungsmittel (605; 705) aufweist, mit dem die Steckdose (100) in einer gewählten Position bezüglich der Aufnahme (24) gehalten werden kann.

4. Steckdose (100) nach einem der vorherigen Ansprüche,
**dadurch gekennzeichnet, dass**
das erste Sicherungsmittel (108) wenigstens einen, vorzugsweise zwei, gegenüber der Steckdose (100) schwenkbaren Klemmbügel (108) umfasst.

5. Steckdose (100) nach Anspruch 4,
**dadurch gekennzeichnet, dass**
der schwenkbare Klemmbügel (108) eine über seine Schwenkachse hinausstehende Klemmfläche (112) aufweist, welche dazu geeignet ist mit der Aufnahme (24) klemmend wechselzuwirken.

6. Steckdose (100) nach einem der Ansprüche 1 bis 3,
**dadurch gekennzeichnet, dass**
das erste Sicherungsmittel (103, 300; 203, 600; 103, 700) ein erstes Formschlussmittel (104, 204) und ein zweites Formschlussmittel (302, 604, 704) aufweist, wobei
das erste Formschlussmittel (104, 204) bezüglich der Steckdose (100) ortsfest sicherbar ist, und wobei
das zweite Formschlussmittel (302, 604, 704) bezüglich der Aufnahme (24) ortsfest sicherbar ist.

7. Steckdose (100) nach Anspruch 6,
**dadurch gekennzeichnet, dass**
das zweite Formschlussmittel (302, 604, 704) mittels des zweiten Sicherungsmittels (605, 705) oder eines weiteren Sicherungsmittels (108, 301) ortsfest sicherbar ist.

8. Steckdose (100) nach Anspruch 6 oder 7,
**dadurch gekennzeichnet, dass**
das erste Sicherungsmittel (103, 300; 203, 600; 103, 700) einen das erste Formschlussmittel (302, 604, 704) aufweisenden Positionierring (300, 600, 700) aufweist, der mit dem zweiten Formschlussmittel (104, 204) in Eingriff bringbar ist.

9. Steckdose (100) nach Anspruch 8,
**dadurch gekennzeichnet, dass**
das erste Formschlussmittel (302, 604, 704) wenigstens eine Nut (302) oder Zahn (604, 704) aufweist, und
das zweite Formschlussmittel (104, 204) wenigstens einen korrespondierenden Zahn (104) oder Nut (204) aufweist.

10. Steckdose (100) nach einem der vorherigen Ansprüche,
**dadurch gekennzeichnet, dass**
die Aufnahme (24) integral in einem Kupplungshaken (20) des Fahrzeugs ausgebildet ist, oder
die Aufnahme (24) in einem Körper, insbesondere einem Flansch, ausgebildet ist, der gemeinsam mit oder separat zu dem Kupplungshaken (20) vorgesehen ist.
